# NOUVEAU FASCICULE DE BREVET EUROPEEN

(11) **EP 0 820 013 B2**
(45) Date de publication et mention de la décision concernant l'opposition: **01.07.2009**
(45) Mention de la délivrance du brevet: 22.05.2002
(21) Numéro de dépôt: 97401702.2
(22) Date de dépôt: 15.07.1997
(51) Int. Cl.: G06F 11/30, G06F 17/30, G06F 11/32

(54) **Procédé de surveillance en temps réel d'un système informatique pour son administration et l'aide à sa maintenance en phase d'exploitation**
Verfahren zur Echtzeitüberwachung eines Rechnersystems zu seiner Verwaltung und Hilfe zu seiner Wartung während seiner Betriebsbereitschaft
Method for real-time monitoring of a computer system for its administration and helping its maintenance during operation

(30) Priorité: 17.07.1996 FR 9608927
(43) Date de publication de la demande: 21.01.1998
(73) Titulaire: BULL S.A., 78430 Louveciennes (FR)
(72) Inventeur: Chen, Ty-Foune, 38360 Sassenage (FR); Espié, Eric, 38400 St Martin d'Heres (FR); Caudrelier, Christian, 38640 Claix (FR); Reix, Tony, 38130 Echirolles (FR)
(74) Mandataire: Pellegrini, Marie Claude

(56) Documents cités:
- S. SWANSON ET AL. : "Real-Time Streaming and Java" OBJECT MAGAZINE, juillet 1996, SIGS PUBLICATIONS, USA, pages 36, 38-39, XP000670859
- "DISK DRIVE WITH EMBEDDED HYPER-TEXT MARKUP LANGUAGE SERVER" IBM TECHNICAL DISCLOSURE BULLETIN, vol. 38, no. 12, 1 décembre 1995, page 479 XP000588211
- RIVA A ET AL: "LISPWEB: A SPECIALIZED HTTP SERVER FOR DISTRIBUTED AI APPLICATIONS" COMPUTER NETWORKS AND ISDN SYSTEMS, vol. 28, no. 7/11, mai 1996, pages 953-961, XP000600288
- HAETOENEN K ET AL: "TASA: TELECOMMUNICATION ALARM SEQUENCE ANALYZER OR HOW TO ENJOY FAULTS IN YOUR NETWORK" 1996 IEEE NETWORK OPERATIONS AND MANAGEMENT SYMPOSIUM (NOMS), KYOTO, APR. 15 - 19, 1996, vol. 2, no. SYMP. 5, INSTITUTE OF ELECTRICAL AND ELECTRONICS ENGINEERS, pages 520-529, XP000670826
- GUNDAVARAN S.; O'REILLY & ASSOCIATES, 1ÈRE ÉDITION, 3/96 D5:CGI-PROGRAMMING ON THE WORLD WIDE WEB", Mars 1996,

## Description

La présente invention concerne un procédé de surveillance en temps réel d'un système informatique pour son administration et l'aide à sa maintenance en phase d'exploitation, système informatique communiquant en mode client/serveur par l'intermédiaire de réseaux interconnectés, chaque client comportant un navigateur supportant un langage hypertexte de haut niveau.

De manière générale, un environnement de gestion distribuée permet d'intégrer l'administration des systèmes, des réseaux et des applications utilisateur, le dialogue entre les diverses machines du système et/ou entre les divers utilisateurs étant organisé autour de requêtes et de réponses à ces requêtes, les requêtes les plus courantes sur un réseau concernant l'accès aux fichiers ou l'accès aux données. Une application est dite conçue selon une architecture "client/serveur" lorsqu'elle se compose de deux programmes indépendants qui coopèrent l'un avec l'autre à la réalisation d'un même traitement, chacun s'exécutant dans un environnement propre (machine, système d'exploitation), une interface programmative utilisant un langage constitué de commandes permettant de maîtriser leur dialogue. Le mode client/serveur a l'avantage de permettre à un utilisateur (par exemple d'un simple microordinateur) appelé client de confier une partie de sa tâche ou de ses opérations à effectuer à un serveur. De cette manière, le client dispose d'une capacité de calcul beaucoup plus importante que celle de son microordinateur. De même, un client peut s'adresser à un serveur spécialisé et sous-traiter efficacement une opération, le serveur se trouvant dans des conditions de réalisation et de compétence optimales de par sa spécialisation. Dans ce contexte et jusqu'à présent, assurer une surveillance en temps réel d'un système informatique pour son administration et l'aide à sa maintenance en phase d'exploitation impliquait le développement d'une application spécifique pour chaque client ce qui représente des inconvénients notables, un tel choix technologique se révélant tout d'abord fort coûteux et interdisant une évolution simple puisque une modification, un ajout ou un nouveau développement entraînent inévitablement une modification, un ajout ou un nouveau développement pour chaque application spécifique.

Face à ce problème technique sans solution efficace, une seconde approche, fondamentalement différente, peut être envisagée : développer une application client générique et faire évoluer uniquement le serveur. Une fois ledit problème technique différemment posé, une solution a été imaginée en observant les systèmes fonctionnant en réseaux interconnectés et en appliquant par analogie cette technique aux applications d'administration. En effet, le dialogue de l'ensemble des entités "client/serveur" peut être établi au travers d'un ou plusieurs réseaux qui peuvent être interconnectés (par exemple Internet), le protocole TCP/lP (Transmission Control Protocol/Internet Protocol) étant alors le plus couramment utilisé. Ces réseaux constituent une véritable toile d'araignée mondiale (appelée couramment par l'homme du métier "web"), ils permettent de relier entre eux des serveurs multimédia et forment l'équivalent d'un immense document hypertexte et multimédia qui est décrit à l'aide de langages hypertextes de haut niveau tels que par exemple le langage HTML (HyperText Markup Language), les communications entre les utilisateurs (clients) et les serveurs étant assurées alors par le protocole HTTP (HyperText Transfert Protocol). Un langage hypertexte comme HTML définit l'organisation logique de l'information avec notamment les liens hypertextes (entre textes, images, sons, séquences vidéo) pour la réalisation d'un contenu au niveau du serveur mais non de sa mise en forme (donc de la mise en page) qui est prise en charge par le logiciel du client. Un client, dans ce contexte est équipé d'un navigateur (appelé "browser" par l'homme du métier) utilisé pour consulter et explorer les informations organisées en pages proposées sur les divers serveurs. Cependant, ces pages construites par les serveurs sont statiques ce qui présente également un important inconvénient lorsqu'il est désiré assurer une surveillance en temps réel d'un système d'administration en phase d'exploitation. En effet, l'évolution du système dans le temps (états des machines, pannes, etc.) doit pouvoir, pour une utilisation efficace, être accessible et rapidement connue et les pages construites ne doivent pas être proposées sous une forme statique mais sous une forme évoluant dynamiquement. En outre, un autre inconvénient appert du simple fait que le fonctionnement d'une machine requiert une intervention et une connaissance de son environnement minimales, et si un problème survient il est nécessaire d'établir un diagnostic et ainsi de démontrer une compétence technique certaine, d'une part, pour trouver rapidement l'existence puis l'origine du problème et d'autre part, pour opérer une correction ou éventuellement dépanner ladite machine, ce qui n'est pas obligatoirement l'apanage de l'utilisateur moyen.

Dans 'Real-Time Streaming and Java' OBJECT MAGAZINE, juillet 1996, SIGS PUBLICATIONS, USA, pages 36, 38-39, XP000670859, S. SWANSON et al. décrivent un procédé de surveilance en temps réel d'un système informatique distribué comprenant un réseau, des serveurs et des clients, ces derniers présentant les informations requises sous forme de pages dynamiques dans un navigateur. Dans ce système les pages présentées sont construites par des programmes JAVA sur les clients. Pour chaque classe de paramètre mesuré il est donc nécessaire de prévoir sur les serveurs à surveiller un module spécifique fournissant lesdits paramètres ainsi que, sur les clients concernés, un module de présentation correspondant.

En outre il est connu du document CGI-programme on the World Wide Web" de S. Gundavaran, O'Reilly of Associates, 1^{e} edition, du 3/96, une méthode pour élaborer des documents hypermédia à partir d'applications CGI. Il est décrit un affichage de la charge d'une machine à partir d'une application CGI accédant à un système d'information, ce système d'information contenant des informations récoltées dans le système de la machine.

La présente invention a pour but de remédier aux divers inconvénients des solutions de l'art antérieur et propose un procédé simple, efficace et peu coûteux à mettre en oeuvre et qui autorise la surveillance en temps réel d'un système informatique pour son administration et l'aide à sa maintenance en phase d'exploitation en construisant et présentant les informations utiles sous forme de pages évoluant dynamiquement.

Pour cela le procédé de surveillance comprend, pour réaliser ladite surveillance, des agents intelligents installés sur chaque serveur pour exécuter, après formulation de requêtes de clients, un contrôle de l'état de chaque serveur en mesurant et stockant des paramètres indiquant l'état et le comportement du serveur à un instant donné, ces informations étant collectées automatiquement en fonction des domaines examinés et traitées par le serveur de manière systématique pour être proposées sous forme de rapports de présentation contenus dans des pages ainsi construites et évoluant de manière dynamique, tandis que le navigateur du client accède à ces pages dynamiques présentant les informations collectées et traitées répondant à sa requête.

Le procédé de surveillance mentionné en préambule est remarquable en ce que les paramètres mesurés sont stockés, et en ce que le traitement systématique des informations collectées pour la construction des pages dynamiques par le serveur est réalisé selon des étapes successives, dont l'une correspond au traitement desdites informations par un module constructeur de page qui reçoit du réseau la requête du client et qui prépare les pages en allant recueillir les données utiles dans les niveaux adéquats dépendant de son système d'exploitation puis en présentant lesdites données à un module d'outils génériques d'aide à la construction indépendant du système d'exploitation, le procédé suivant l'invention est défini par la revendication principale.

Ainsi, selon l'idée de l'invention et ceci contre toute attente, il est offert une solution efficace, rapide, d'un grand confort et peu coûteuse grâce à l'utilisation d'agents intelligents sur les serveurs pour la construction de pages dynamiques consultables et exploitables au moyen des navigateurs des clients, clients pour lesquels aucun développement n'est nécessaire pour consulter et exploiter les informations dynamiques reçues en réponse à leurs requêtes. Ainsi, lesdites pages peuvent vivre avec les différentes requêtes, ce qui signifie également que, une pluralité de clients qui posent la même question à un instant donné n'obtiennent pas obligatoirement la même réponse. Ce choix technologique permet de réduire très significativement les coûts puisque tout développement. propre à faire évoluer ou enrichir le système de départ, n'est à réaliser qu'uniquement sur le serveur, aucun logiciel spécifique n'est à livrer ou à mettre en oeuvre par le client qui n'a besoin seulement que d'être équipé d'un navigateur du commerce, par exemple du type Netscape Navigator (marque déposée par Netscape Communications Corporation) qui est un produit de faible coût, universellement connu et utilisé et qui de plus, actuellement, équipe la plupart des microordinateurs.

Avantageusement, pour l'application du procédé de surveillance selon l'invention, la constitution d'une page est réalisée du côté serveur et est obtenue par traitement dans différents modules situés à plusieurs niveaux selon leurs dépendances avec le système d'exploitation. Deux niveaux principaux sont à observer, le premier relatif à la construction d'une page avec la connaissance sémantique du système d'exploitation mais sans interface directe avec ledit système d'exploitation, alors que le second est relatif à la mise en oeuvre d'accès physiques aux informations du système d'exploitation.

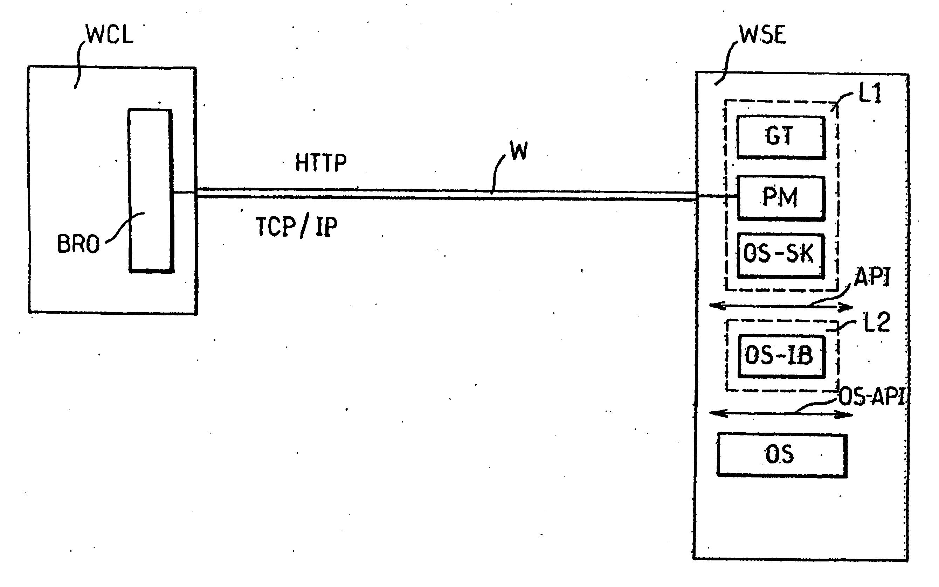

La description suivante en regard du dessin annexé, le tout donné à titre d'exemple non limitatif, fera bien comprendre comment l'invention peut être réalisée.

Sur la figure unique est représenté de manière très schématique un exemple d'échange d'informations (requêtes et réponses à requêtes) entre un client et un serveur communiquant par l'intermédiaire de réseaux interconnectés en utilisant le procédé conforme à l'invention.

Dans le cadre de l'application de ce procédé, l'architecture générale (machines et réseaux) est basée sur l'architecture des réseaux interconnectés ("web"). Ceci signifie que lorsqu'un serveur est connecté à un réseau local ou à un réseau longue distance (respectivement LAN ou WAN pour l'homme du métier) ledit procédé peut être appliqué et donc rendu actif d'une quelconque machine connectée au réseau sans avoir à installer de logiciels ou outils spécifiques ou même d'agents de gestion (appelés "proxy agents" par l'homme du métier). De cette manière, un serveur WSE connecté au réseau W et utilisé dans un quelconque point du monde peut être surveillé, d'un quelconque autre point du monde, à partir d'un microordinateur WCL connecté au réseau W, par exemple un simple PC comportant un navigateur BRO de préférence du type Netscape Navigator supportant un langage hypertexte de haut niveau comme HTML. Tout le travail de présentation est effectué du côté client WCL en utilisant le navigateur BRO. Le transfert des données entre le client WCL et le serveur WSE est réalisé au travers du réseau W en utilisant le protocole de communication standard HTTP par-dessus le protocole multicouche TCP/IP. Lorsque le client WCL envoie une requête parce qu'il désire afficher sur son écran une nouvelle page, selon le présent procédé, à la réception de ladite requête, des données brutes sont recueillies par le serveur WSE qui construit alors des données synthétiques et ajoute des informations relatives aux alarmes ou aux problèmes rencontrés, puis écrit le code en langage HTML qui est transmis sur le réseau vers le client en réponse à sa requête pour y être affiché après interprétation du texte reçu en langage HTML.

Le traitement systématique des informations collectées pour la construction des pages dynamiques par le serveur est réalisé selon des étapes successives qui correspondent chacune au traitement de ces informations par un module particulier. Comme cela a été précédemment énoncé, pour l'application du procédé de surveillance, la constitution d'une page est réalisée du côté serveur WSE et est obtenue par traitement dans différents modules situés à plusieurs niveaux selon leurs dépendances avec le système d'exploitation OS. Deux niveaux principaux sont à observer, le premier L1 relatif à la construction d'une page avec la connaissance sémantique du système d'exploitation mais sans interface directe avec ledit système d'exploitation, alors que le second L2 est relatif à la mise en oeuvre d'accès physiques aux informations du système d'exploitation OS. Les principaux modules particuliers sont ci-dessous décrits de manière plus détaillée.

Le module constructeur de page PM, lorsqu'il reçoit la requête du client envoyée sur le réseau W, prépare les pages en allant récupérer les informations utiles dans les niveaux adéquats dépendant de son système d'exploitation OS puis présente ces informations à un module d'outils génériques GT d'aide à la construction également indépendant du système d'exploitation OS. Avec le module PM, il est possible de construire un graphique pour représenter un ensemble de données, de même, une photographie peut être utilisée pour présenter un concept ou un composant matériel ("hardware") spécifique. Chaque page est fabriquée en regroupant plusieurs modules. Chaque module présente une sémantique particulière d'un point de vue spécifique dans un format choisi à partir d'un ensemble d'événements possibles. Par exemple, la corrélation entre les volumes physiques, les groupes de volumes, les volumes logiques et les systèmes de fichiers peut être présentée, d'un point de vue groupe de volume dans un format en tableaux ou bien d'un point de vue système de fichiers (tous les volumes physiques concernant un système de fichiers donné) dans un format graphique. Cette dernière caractéristique permet de faciliter la modification (sémantique et forme) de la manière de présenter une sémantique. Il est également ainsi possible d'utiliser les programmes en langage "java" (les données sont présentées dynamiquement du côté client). De manière avantageuse, une aide peut être associée à la construction de chaque page. Cette dernière doit contenir toutes les informations et explications dont l'utilisateur a besoin pour comprendre d'une part, la signification des informations affichées et d'autre part, comment naviguer à l'intérieur du labyrinthe qu'est un "hyperscript" en langage HTML. Tous les textes affichés sur l'écran du client peuvent être internationalisés, c'est-à-dire qu'ils peuvent être lus dans le langage du serveur questionné ou dans celui du client qui émet la requête.

Le module d'outils génériques offre un jeu d'outils d'aide à la construction des pages dans le langage HTML pour construire des représentations graphiques deux ou trois dimensions. Les outils ainsi offerts ne sont pas sémantiquement dépendants du système d'exploitation OS. Suivent quelques exemples d'outils fournis :
- L'outil de programmes de séquence type ("script" dans le langage de l'homme du métier) est un outil portable utilisé pour écrire les modules nécessaires à l'application du présent procédé, cet outil présente les avantages suivants :
   - un accès facile et indépendant aux commandes de base du système d'exploitation OS qui permettent de manipuler les fichiers et d'exécuter les commandes dudit système d'exploitation,
   - un service efficace de mise au point ("debug") et d'analyse ("trace"),
   - un niveau de performance suffisant,
   - une véritable portabilité vers différents systèmes d'exploitation,
   - une syntaxe qui permet une maintenance et une évolution aisées,
   - un langage qui permet de structurer et de représenter des données complexes,
   - la possibilité d'étendre le langage en interfaçant avec le langage C.
- Un jeu d'outils graphiques indépendants du système d'exploitation tels que, des graphiques deux dimensions et trois dimensions soient produits de manière simple et rapide, des photographies soient incorporées dans des pages HTML, des graphiques évolutifs soient produits en fonction de phénomènes eux-mêmes évoluant de manière lente.
- Des outils qui permettent d'exploiter pleinement le langage HTML.
- Un outil d'aide à la construction qui offre une interface applicative générique qui est utilisée par chaque page.

Le module de connaissance sémantique OS-SK dépendant du système d'exploitation quant à lui, prélève les données de bas niveau dans un module de contruction d'information OS-IB dépendant du système d'exploitation présent au second niveau L2, puis construit une représentation sémantique de haut niveau (structure logique) des données requises. Par exemple, la corrélation entre les volumes physiques propres à un système d'exploitation tel qu'un système sous Unix (marque déposée aux US et dans d'autres pays, licenciée exclusivement par l'intermédiaire de X/OPEN Company Ltd.), les groupes de volumes, les volumes logiques et les systèmes de fichiers peut être présentée, en commençant par l'acquisition des données de base puis en regroupant par groupes de volumes lesdites données d'un point de vue logique. De manière encore plus détaillée, le module OS-SK comporte trois parties. Une première partie, en relation directe avec le module PM, qui contient le code permettant de recueillir des informations sémantiques et de les présenter. Une seconde partie qui est le gestionnaire de structures logiques contenant le code qui permet de construire des structures sémantiques en regroupant des structures de base individuelles, par exemple présentant la relation entre adaptateurs de réseaux locaux, interfaces et démons. Enfin, une troisième partie qui est le gestionnaire de structures de base contenant le code qui permet de construire des structures de base, par exemple les informations relatives à chaque adaptateur de réseaux locaux. En outre et de manière à minimiser le temps nécessaire pour répondre à une requête, pour construire une page en langage HTML ou bien lorsque plusieurs utilisateurs lancent successivement une requête pour une même page, plusieurs antémémoires sont avantageusement utilisées. Ces antémémoires sont prévues pour conserver en mémoire des informations d'acquisition complexe plutôt que des informations dynamiques. Elles sont structurées en fonction de leur niveau d'utilisation (page, structure logique, informations de base). Une durée et/ou une condition est associée à chaque bloc stocké en antémémoire. Ainsi, avec la première partie est associée l'antémémoire de page qui conserve des pages complètes telles que celles relatives à une configuration de système. Avec la seconde partie est associée l'antémémoire de structures logiques qui conserve des structures telles que celles relatives à un système de fichiers, à des volumes logiques, à des groupes de volumes et des volumes physiques. A la troisième partie est associée l'antémémoire de structures de base qui conserve des structures telles que l'activité ou des caractéristiques d'un volume physique particulier, par exemple un disque.

Le module de construction d'information du système d'exploitation OS-IB dépendant du système d'exploitation OS utilise des commandes dépendant du système d'exploitation pour faire l'acquisition de données de bas niveau et offre une interface applicative API pour communiquer avec le module OS-SK de connaissance sémantique du système d'exploitation, il est en relation avec le système d'exploitaion OS par l'intermédiaire d'une interface applicative OS-API. Selon le présent procédé, il est prévu de présenter des informations relatives à la configuration de système, à l'utilisation de système, aux alarmes et à la fiabilité de système, ces informations correspondent soit à des valeurs instantanées, des valeurs historiques, soit à des tendances. Certaines valeurs relatives aux caractéristiques du système d'exploitation peuvent être accédées en appelant directement des commandes du système d'exploitation (par exemple, pour obtenir les configurations logicielle et matérielle complètes sur un système d'exploitation donné, AIX, Windows NT, etc.), alors que d'autres sont produites par des démons spécifiques. De manière à offrir au module OS-SK une vue uniforme de toutes les informations utiles, le module OS-IB met en oeuvre une interface applicative API qui permet de cacher la complexité interne. En fait, le module OS-IB est un module complètement indépendant du niveau supérieur. Dans certains cas, l'acquisition de certaines valeurs immédiates ne peut être réalisée parce qu'une ou plusieurs analyses sélectives ("snapshot") successives sont nécessaires pour obtenir un résultat ou donner une information représentative. Les valeurs immédiates permettent de connaître et d'afficher rapidement par exemple, l'état instantané d'une machine, une configuration logicielle ou matérielle instantanée, les processus les plus consommateurs à un instant donné, l'activité instantanée du "cpu", l'état instantané des alarmes, etc.. Les valeurs immédiates permettent aussi d'établir des diagnostics efficaces relativement à des composants fondamentaux d'une machine. Les valeurs dites historiques, elles, sont conservées pour pouvoir être utilisées soit pour afficher des modifications d'états, l'évolution de valeurs avec une présentation graphique, etc., soit pour calculer des tendances ou établir des prévisions. Un des agents intelligents utilisés sur le serveur et en particulier intégré dans le module OS-IB est l'agent RSF (Remote Services Facilities) qui est un agent de gestion d'événements conçu pour envoyer des notifications en temps réel dans un mode donné. L'utilisation de l'agent RSF permet d'offrir une structure pour les registres tampons d'alarmes ainsi qu'un historique des alarmes, ce qui permet de faciliter considérablement la recherche relative à une alarme particulière. De plus, à chaque valeur immédiate ou instantanée est associé un seuil qui peut être aisément modifié par l'utilisateur selon ses besoins, seuil qui, lorsqu'il est dépassé, permet de déclencher un événement. Cet événement est alors stocké dans un registre prévu pour l'enregistrement de l'historique des événements avec une date, un nom d'indicateur relatif à l'événement, une valeur de seuil, etc., le dernier événement enregistré pouvant être utilisé pour déterminer si une valeur instantanée est respectivement au-dessus ou en-dessous d'un seuil et alors afficher sur l'écran du client la couleur correcte (respectivement rouge ou verte) de l'icone correspondant. L'agent RSF est prévenu des nouveaux événements et commande le lancement d'une alarme lorsqu'un seuil en observation est dépassé avec possibilité de différer le lancement de l'alarme jusqu'à l'observation de, par exemple, deux ou trois dépassements de ce seuil. Bien entendu, le lancement d'une alarme par l'agent RSF n'est effectivement mis en oeuvre que lorsque, pour ce seuil, aucune alarme n'a déjà été déclenchée ou qu'une alarme antérieure a été supprimée. Ainsi, il peut être considéré qu'un seuil déclenche un événement chaque fois qu'une valeur dépasse ou repasse en-dessous dudit seuil ou qu'une valeur a dépassé ou repassé deux ou trois fois ledit seuil. L'agent RSF observe fréquemment le fichier de journalisation d'erreurs "errlog file" et détecte ainsi efficacement une nouvelle alarme. Lorsqu'une alarme est détectée, la description de cette alarme est stockée dans un fichier associé à l'élément logiciel ou matériel cause de cette alarme. L'agent RSF conserve un historique de l'ensemble des alarmes. Les alarmes sont supprimées soit après l'intervention de l'utilisateur, soit à l'expiration d'un délai prédéterminé lorsque l'utilisateur a lancé une requête propre à une page qui présente cette alarme.

L'interface programmatique API entre le module OS-IB et le module OS-SK pour une meilleure appréhension peut être divisée en deux parties qui offrent une vue efficace de toutes les informations dont le module OS-IB fait l'acquisition, La première partie concerne essentiellement les fichiers contenant des informations qui sont principalement fixes. La seconde partie comporte plusieurs librairies en langage C qui offrent une interface aux registres tampons contenant les valeurs immédiates ainsi qu'aux fichiers contenant les divers historiques. Cette deuxième partie est générique, ceci signifie qu'il n'est pas nécessaire d'ajouter une nouvelle fonction à l'interface API lorsqu'une nouvelle classe avec de nouveaux attributs est ajoutée. Toutes les classes et tous les attributs sont vus comme des identifiants uniques. Une nouvelle entrée pour la nouvelle classe est ajoutée dans une description abstraite de toutes les classes. Un registre tampon d'activité est en relation avec cette seconde partie, ce registre est mis en oeuvre à l'instar d'une interface programmatique pour des données stockées dans une mémoire partagée, il est rempli par un deuxième agent intelligent ASRX (Automatic Site Reporter for Unix) avec des informations lues dans le système d'exploitation. Un registre tampon contenant l'historique des activités est construit avec des valeurs immédiates prises dans le registre tampon d'activité en utilisant la seconde partie de l'interface programmatique API. Un gestionnaire de seuils conserve les valeurs antérieures d'un registre tampon de manière à être capable de déterminer si une valeur a dépassé un seuil. Ce gestionnaire appelle directement l'agent RSF pour lui signifier qu'un nouvel événement est intervenu et qu'il doit analyser si une alarme doit être produite. Le code de ce gestionnaire peut être générique puisque toutes les données qui sont inspectées sont du type information représentative, par exemple, un seuil peut être mis sur la taille de chaque système de fichiers. Egalement, un gestionnaire de tendances conserve les valeurs antérieures d'un registre tampon de manière à être capable de prévoir qu'une limite est proche d'être atteinte, par exemple dans combien d'unités de temps la taille maximale d'un système de fichiers risque d'être atteinte. Dans ce contexte, l'agent RSF interroge le fichier "errlog" ainsi que différents fichiers spécifiques et remplit le registre tampon d'alarme, les fichiers d'historiques de configuration et d'alarme et enfin appelle lorsqu'ils existent les avertisseurs sonores ("beepers"). En fait, lors de la surveillance des fichiers de journalisation du système, un problème est détecté par l'agent RSF lorsque survient une erreur, car des messages spécifiques sont écrits à destination de ces fichiers de journalisation par une application telle que "errlog". Lors de la détection d'un problème, si de plus un seuil ou un ensemble de seuils compris dans un tel message est dépassé dans un délai déterminé, une réaction est déclenchée. L'information relative à la configuration instantanée propre à la détection et à la réaction au problème trouvé par l'agent RSF est stockée dans des fichiers de l'agent RSF contenant des sources de messages, des "gabarits" de messages et les messages conservés.

Chaque source de message que l'agent RSF contrôle et transmet possède les attributs suivants :
- un identifiant unique d'une chaîne de caractères utilisé par l'agent RSF,
- un chemin vers le fichier de journalisation de la source surveillée,
- un chemin pour exécuter une action lorsqu'un dépassement de seuil est détecté,
- un intervalle de temps à la fin duquel une information détectée est supprimée,
- un intervalle de temps pendant lequel l'agent RSF explore l'arrivée de nouveaux messages d'une source.

Dans ce cas, les commandes manipulant le fichier de commandes des sources de messages peuvent, à titre d'exemple, être les suivantes :
- *mkmsrc* : cette commande alerte l'agent RSF pour la surveillance d'une source qui possède les attributs précédemment décrits,
- *Ismsrc* : cette commande lance l'impression de divers attributs des sources contenus dans le fichier de commandes,
- *chmsrc* : cette commande permet de modifier les attributs d'une source existante qui est surveillée,
- *rmmsrc* : la source avec l'identifiant spécifié ne doit plus être surveillée pour la réception de messages.

Une liste de messages est conservée pour chaque source surveillée par l'agent RSF, chaque message a les attributs suivants
- un identifiant unique utilisé par l'agent RSF pour détecter un message déterminé dans la source,
- une valeur d'un entier qui définit combien de messages comportant un seuil peuvent être détectés avant qu'une action ne soit exécutée,
- une durée de temps pendant laquelle un message détecté doit être considéré valide, si un message est détecté et reste sous un seuil déterminé il sera supprimé après cette durée de temps,
- le nombre maximum de messages qui peuvent être stockés dans un registre après détection.

Les commandes manipulant les fichiers contenant les "gabarits" de messages peuvent, à titre d'exemple, être les suivantes :
- *Ismsg* : cette commande permet de lister les messages dans chaque source surveillée par l'agent RSF,
- *mkmsg* : cette commande permet d'alerter l'agent RSF pour chercher la source donnée pour un message spécifié ayant les attributs précédemment décrits,
- *chmsg* : cette commande permet de modifier les attributs d'un message qui est recherché par l'agent RSF,
- *rmmsg* : cette commande permet d'alerter l'agent RSF pour qu'il ne recherche plus le message déterminé associé à une source surveillée.

En outre, un démon de l'agent RSF va périodiquement explorer chacune des sources surveillées en recherchant de nouvelles apparitions des messages surveillés. Lorsque l'un d'entre eux est trouvé, le compte relatif au nombre d'apparitions de ce message est incrémenté et si ce compte dépasse la valeur seuil déterminée pendant la période de temps déterminée, l'action spécifique est exécutée. Ce démon va également périodiquement nettoyer les fichiers lorsque cela est nécessité.

Un second agent intelligent, l'agent ASRX, est également présent dans le module OS-IB et a pour principal objet la mesure et la gestion d'une machine, il permet de collecter de manière automatique des informations qui sont ensuite produites automatiquement sous forme de rapports de présentation qui sont également automatiquement mis à jour. L'agent ASRX est avantageusement exploité pour produire les pages relatives à l'utilisation des machines surveillées, en particulier, il permet de collecter les données brutes relatives à l'utilisation des machines, de calculer les données utilisables pour fournir les données calculées immédiates et calculer les dépassements de seuils et aussi de réaliser l'historique (jour, semaine, mois, à partir d'un instant donné) des données calculées. Toute modification dans le système doit être fournie d'une part au collecteur de données de l'agent ASRX, il est ainsi nécessaire d'y ajouter les nouveaux attributs dans les classes, les nouvelles classes, le système de fichiers, etc., et d'autre part à l'outil de création de rapports de présentation des données, interne à l'agent ASRX, les nouveaux attributs, les nouvelles classes et les nouveaux modes de calcul étant nécessaires à cet outil pour créer ces rapports. L'agent ASRX est en fait constitué de trois parties principales qui sont, le collecteur de données, le gestionnaire de données et le rapporteur de données.

Le collecteur de données s'exécute sur chaque machine surveillée. La collection des données est réalisée selon des profils qui permettent de déterminer quels objets doivent être surveillés de manière à recueillir les informations de base nécessaires à l'obtention d'un procédé fiable et sûr. La collection de données repose sur la conception d'une structure de base qui facilite l'addition de nouveaux objets à surveiller. Les caractéristiques principales du collecteur de données peuvent être ainsi résumées : une taille mémoire raisonnable, une consommation cpu minimisée pour ne pas affecter les performances de la machine, une exécution qui ne provoque pas de panne de la machine et préserve son intégrité, un portage simple sur différents types de systèmes d'exploitation et un test simple, une installation facile sur différents types d'outils, une gestion simple et une mise en oeuvre de la collection sans perte de données pendant une période déterminée.

Les fonctions majeures du collecteur de données sont les suivantes :
- les données sont collectées de deux manières différentes :
   - au départ, certains attributs définis comme invariables jusqu'à la prochaine réinitialisation de la machine sont collectés une seule fois, la version du système, par exemple, ne doit pas être changée dynamiquement,
   - à une date fixée, certains attributs peuvent être collectés selon l'année, le mois, la semaine, le jour et l'heure (heure, minute).

Des dates et des temps spécifiés pour la collection de données doivent être configurés pour chaque objet. Un mécanisme d'appel de méthodes permet d'ajouter de nouveaux objets à surveiller (fonctions d'appel système, commandes système). Les objets à surveiller sont classifiés en utilisant un modèle d'objet donné et satisfont aux critères suivants :
- permettre de calculer la durée moyenne sans panne (MTTF), le temps moyen de fonctionnement (MUT) ou d'arrêt (MDT) d'un composant matériel ou logiciel,
- enregistrer toute erreur ou tout événement qui survient tel que :
   - panne système avec sa cause (aide, perte d'alimentation, etc.), Iréinitialisation du système,
   - erreurs "matérielles" (hardware),
   - erreurs "logicielles" (noyau, transmission, applications),
   - changements de configuration système,
- enregistrer les principales activités des composants :
   - statistiques relatives à la charge système,
   - temps cpu,
   - activité disque (nombre d'entrées/sorties),
   - nombre de traitements,
   - activités de transmission,
- enregistrer les configurations "matérielles et logicielles" de départ pour le collecteur de données (liste des logiciels installés, liste des cartes installées).

Toutes ces données sont extraites du gestionnaire de données objets. Les profils standard sont prévus pour faciliter la production de statistiques et l'analyse de la disponibilité. Le contrôleur de ressources système est avantageusement utilisé pour gérer le collecteur de données (démarrages/arrêts, validation/invalidation de l'analyse ["trace"]). Dans le cas où le collecteur de données est placé en interruption, le contrôleur de ressources système enregistre les événements dans le fichier d'enregistrement d'erreurs.

Le gestionnaire de données, quant à lui, permet de réarranger les données collectées des différentes machines observées de manière à faciliter l'accès relativement à des critères prédéfinis (date, version, modèle de machine, etc.). Les caractéristiques principales du gestionnaire de données peuvent être ainsi résumées : une grande capacité de stockage, une bonne performance en termes de requêtes, la facilité de mettre en oeuvre des requêtes complexes et la facilité de gestion. Les données sont calculées et conservées dans des fichiers. Les fonctions principales traitées par le gestionnaire de données sont les suivantes :
- création de fichiers ou de "bases de données" (tableaux, relations, indices, etc.), conception de fichiers ou de "bases de données" pour un accès aisé, pour l'ajout de classes de nouveaux objets à surveiller et pour l'amélioration des performances,
- insertion de données fiables, disponibles et aisées à utiliser dans les fichiers ou "bases de données", tous les nouveaux objets collectés sur les machines observées sont placés dans ces fichiers ou "bases de données" où des informations communes sont construites (sans exploration),
- les requêtes de haut niveau sont transmises vers ces fichiers ou "bases de données" pour autoriser : l'exécution de rapports de présentation, l'analyse de données, le fonctionnement d'applications interactives comme la navigation, des interfaces programmatives pour les opérations à réaliser dans ces fichiers ou "bases de données" ("get", "search", "filter", etc.) sont prévues pour faciliter l'écriture d'applications.

L'organisation de ces fichiers ou "bases de données" est prévue pour satisfaire à toutes les requêtes émises par les applications. Une base relationnelle, par exemple Oracle (marque d'Oracle Corporation) peut être utilisée pour la gestion de données en combinaison avec tout outil nécessaire au développement d'applications.

Le rapporteur de données à son tour, permet de générer des rapports de présentation standard à partir des fichiers dans lesquels sont stockées toutes les données brutes collectées. Les caractéristiques principales du rapporteur de données peuvent être ainsi résumées : facilité d'utilisation, contrôle des requêtes au moyen d'interfaces utilisateur graphiques, la génération de rapports doit pouvoir utiliser des outils existants. Les résultats sont classifiés pour autoriser une excellente disponibilité et fiabilité du système, des activités performantes du système et une configuration "matériel/logiciel" du système aisée. Les différents résultats peuvent être obtenus et utilisés efficacement à partir de la définition d'un rapport de présentation général ou de la définition d'un rapport de présentation détaillé alors que des applications interactives sont prévues comme par exemple, un navigateur pour lire certains champs des fichiers ainsi qu'une présentation graphique sur un écran et son impression sur une imprimante.

Pour plus de précisions, l'objet du rapport de présentation général est de fournir une vue synthétique et globale de la fiabilité et de la disponibilité du système à partir d'indicateurs tels que, la durée moyenne sans panne (MTTF), l'intervalle moyen entre pannes (MTBF), le temps moyen de fonctionnement (MUT) ou d'arrêt (MDT) d'un composant matériel ou logiciel. Le repérage des erreurs qui apparaissent souvent, l'évolution des principales erreurs pour une version "logiciel" donnée, la distribution des erreurs et l'utilisation de composants standard en termes de temps cpu, de volume d'entrées/sorties, d'activités réseau, de ressources utilisées, sont également facilités par la définition du rapport de présentation général. L'activité des composants est relative à une grande variété d'utilisations, les mesures ("métriques") proposées sont par exemple utilisées pour exploiter une comptabilité, déterminer une charge ou un équilibrage de travail ou des échantillons à examiner, etc.. Ainsi, l'analyse de la charge de travail en fonction des ressources en termes de temps de réponse à une transaction, fournit un élément significatif pour une analyse efficace de la disponibilité, de même que l'indication des ressources responsables des problèmes rencontrés. Tout ceci requiert l'utilistion de composants pour mesurer et collecter le temps de réponse à une transaction (disque, mémoire, délais sur le cpu, réseaux, etc.). De manière générale les ressources système qui peuvent provoquer des problèmes pour une application sont le processeur, la mémoire, les disques, les chaînes, les communications interprocessus, les réseaux, les unités d'exécution, etc..

De même, l'objet du rapport de présentation détaillé correspond à une utilisation spécifique des fichiers pour un objet particulier. Ainsi, les besoins doivent être clairement exprimés pour proposer des outils dédiés à l'extraction de données dans ces fichiers. La forme précise d'une analyse statistique de données est spécifique à chaque utilisation. Sa conception autorise à produire des rapports de présentation standard sur la disponibilité et la fiabilité des machines et des composants, ceci correspond à une vue globale du produit surveillé en termes de durée moyenne sans panne (MTTF), de temps moyen de fonctionnement (MUT) ou d'arrêt (MDT), etc., comme indicateurs sur les composants "matériel" ou "logiciel". Une corrélation peut également être établie entre les activités des composants et les erreurs. Sa conception permet aussi de présenter une information générale sur le contenu des fichiers : date d'observation (début, fin, nombre de machines, modèle, version, etc.), liste des machines observées par activité (développement, gestion de configuration, fichiers, télétraitement, etc.), nombre de types d'erreurs détectés pendant l'observation, liste des modèles observés, liste des systèmes d'exploitation observés par version, nombre de machines observées pour chaque modèle. Grâce à cette conception, il est aussi fourni des services pour l'approche de l'analyse afin de déterminer la cause de l'erreur. Une application interactive est nécessaire pour mettre en oeuvre cette caractéristique et la représentation de données utilise une présentation graphique ou textuelle.

Les contenus des fichiers donnent ainsi une vue synthétique de toutes les informations qui aident à choisir les machines à observer et présentent le nombre de versions existantes dans les fichiers, le début et la fin de la période d'observation pour une version d'un système de même que le nombre de machines satisfaisant aux critères des modèles et des versions.

La vue d'une machine peut être séparée en faisant apparaître divers critères : une vue relativement à la position, une vue relativement au modèle de la machine, une vue relativement aux erreurs et une vue relativement aux composants "matériel" ou "logiciel".

De cette manière, le procédé selon l'invention fournit un état général du serveur surveillé, incluant le comportement de la machine en termes d'événements anormaux, de pannes ou de dégradation des performances. Il fournit en fait une application graphique qui permet d'exécuter des tâches de gestion du système par l'intermédiaire de manipulation des objets. Ce procédé est bâti autour de divers concepts qui prennent en compte le système d'exploitation, le stockage des données, le réseau concerné, l'impression et les applications. Chaque concept implique des objets précisément identifiés, par exemple le concept relatif au système d'exploitation regroupe le cpu, les traitements, les démons, le nombre d'utilisateurs connectés, etc.. Pour chaque objet géré, les éléments suivants sont couverts : les attributs d'identification d'objets, les attributs de configuration d'objets, l'utilisation d'objets et les attributs de performance, les attributs d'accès aux objets et les informations d'état des objets (actif ou inactif).

Le présent procédé s'intéresse aux aspects des configurations logicielle et matérielle, à l'utilisation des ressources système en temps réel ainsi qu'aux différentes tendances et au traitement des incidents. Il permet d'exploiter des fonctionnalités avantageusement organisées pour réaliser les divers traitements suivants :
- le traitement propre aux configurations qui fournit une vue globale de la configuration logicielle et matérielle d'un serveur,
- le traitement propre à la gestion de réseaux qui fournit une vue synthétique relativement à la disponibilité des ressources concernées,
- le traitement propre à l'utilisation qui permet de surveiller la capacité des ressources en vue de satisfaire aux besoins actuels et futurs, il implique de mesurer l'utilisation des ressources principales logicielles et matérielles et permet de fournir un contrôle visuel du serveur,
- le traitement propre aux changements qui permet de conserver toute trace de changement logiciel et matériel,
- le traitement propre aux événements qui permet de détecter, réaliser des rapports de présentation, rechercher et corriger les problèmes relatifs au service d'émission de messages, une analyse des rapports de présentation relatifs aux problèmes permet d'éviter la réapparition desdits problèmes,
- le traitement propre à la gestion des erreurs qui permet de rétablir des services normaux pour l'utilisateur,
- le traitement propre aux services qui permet le contrôle des services les plus utilisés tels que l'impression, la messagerie, le transfert de fichiers, l'initialisation de traitements à distance, etc.,
- le traitement propre à la sécurité qui permet de fournir l'état du contrôle d'accès à des ressources locales ou distribuées du point de vue utilisateur, les statistiques sur les tentatives d'intrusion par exemple,
- le traitement propre aux applications qui permet de gérer diverses applications (configuration, installation, client, etc.), il fournit des précisions sur l'état, l'utilisation, la consommation de ressources relativement à ces applications.

Pour conclure, suivant le présent procédé de surveillance, il est offert une solution efficace, rapide, d'un grand confort et peu coûteuse grâce à l'utilisation d'agents intelligents sur les serveurs pour la construction de pages dynamiques consultables et exploitables au moyen des navigateurs des clients, clients pour lesquels aucun développement n'est nécessaire pour consulter et exploiter les informations dynamiques reçues en réponse à leurs requêtes. Ainsi, lesdites pages peuvent vivre avec les différentes requêtes. Ce choix technologique permet de réduire très significativement les coûts puisque tout développement, propre à faire évoluer ou enrichir le système de départ, n'est à réaliser qu'uniquement sur le serveur, aucun logiciel spécifique n'est à livrer ou à mettre en oeuvre par le client qui n'a besoin seulement que d'être équipé d'un navigateur du commerce, qui est un produit de faible coût, universellement connu et utilisé et qui, de plus, actuellement, équipe la plupart des microordinateurs. Grâce à ce procédé, il est permis d'exploiter les informations principales permettant de conserver un fonctionnement correct des machines. Une simple interface pour les ressources système et les services est fournie et sert à cacher la complexité des systèmes d'exploitation. Ce procédé s'adresse particulièrement aux utilisateurs ne possédant pas de compétences dans le domaine de la gestion de systèmes, tout utilisateur en charge du fonctionnement d'une machine peut ainsi recevoir une aide précieuse, une grande quantité d'informations utiles lui permettant d'effectuer une intervention efficace pour un dépannage ou une restauration des ressources. Selon le présent procédé, qui peut être lancé simplement à partir d'un microordinateur connecté à un réseau local, il est proposé une configuration système simple, une vue globale du comportement de la machine alors que la même interface graphique est utilisable sur une quelconque machine du système. La portabilité sur différents systèmes d'exploitation est rendue aisée. Les utilisateurs gérant les diverses machines avec la même interface graphique et les mêmes concepts, et ceci sans formation, peuvent rapidement comprendre si le fonctionnement d'un serveur est ou non correct, établir des contacts efficaces avec des équipes de support en donnant des informations significatives pour un diagnostic sûr. Une telle approche permet de réduire considérablement le temps d'inutilisation pour cause de panne d'un serveur et autorise, en outre, une exploitation puissante et efficace des informations fournies selon le présent procédé par un système expert.

## Revendications

1. Procédé de surveillance en temps réel d'un système informatique pour son administration et l'aide à sa maintenance en phase d'exploitation, système informatique communiquant en mode client/serveur par l'intermédiaire de réseaux (W) interconnectés, chaque client (WCL) comportant un navigateur (BRO) supportant un langage hypertexte de haut niveau, et, pour réaliser ladite surveillance, des agents intelligents sont installés sur chaque serveur (WSE) pour exécuter, après formulation de requêtes de clients, un contrôle de l'état de chaque serveur (WSE) en mesurant des paramètres indiquant l'état et le comportement du serveur à un instant donné, ces informations étant collectées automatiquement en fonction des domaines examinés et traitées par le serveur de manière systématique pour être proposées sous la forme de rapports de présentation contenus dans des pages ainsi construites et évoluant de manière dynamique, tandis que le navigateur du client (BRO) accède à ces pages dynamiques présentant les informations collectées et traitées répondant à sa requête, les paramètres mesurés sont stockés et en ce que le traitement systématique des informations collectées pour la construction des pages dynamiques par le serveur est réalisé selon des étapes successives, dont l'une correspond au traitement desdites informations par un module constructeur de page (PM) qui reçoit du réseau la requête du client et qui prépare les pages en allant recueillir les données utiles dans les niveaux adéquats dépendant de son système d'exploitation puis en présentant lesdites données à un module d'outils génériques d'aide à la construction indépendant du système d'exploitation, d'autres des étapes correspondent aux modules respectifs suivants :
- un module de connaissance sémantique (OS-SK) du système d'exploitation qui prélève les données de bas niveau dans un module de construction d'information dépendant du système d'exploitation puis qui construit une représentation sémantique de haut niveau des données requises,
- un module de construction d'information (OS-IB) du système d'exploitation qui utilise des commandes dépendant du système d'exploitation pour faire l'acquisition de données de bas niveau et offre une interface applicative pour communiquer avec le module de connaissance sémantique du système d'exploitation,
- un module d'outils génériques (GT) d'aide à la construction des pages dans le langage hypertexte de haut niveau,
**caractérisé en ce que**, pour l'application dudit procédé, un desdits agents intelligents qui est utilisé sur le serveur, intégré dans le module de construction d'information (OS-IB) du système d'exploitation, est un agent de mesure et de gestion d'une machine, il permet de collecter de manière automatique des informations qui sont ensuite produites automatiquement sous forme de rapports de présentation également automatiquement mis à jour, cet agent est exploité pour produire les pages relatives à l'utilisation des machines surveillées en permettant de collecter des données brutes relatives à l'utilisation des machines, de calculer des données utilisables pour fournir des données instantanées calculées, calculer des dépassements de seuils et réaliser l'historique des données calculées, ledit agent étant constitué de trois parties principales, le collecteur de données qui recueille des données selon des profils qui permettent de déterminer quels objets doivent être surveillés de manière à recueillir les informations de base nécessaires, le gestionnaire de données qui permet de réarranger les données collectées des différentes machines observées de manière à faciliter l'accès relativement à des critères prédéfinis et le rapporteur de données qui permet de générer des rapports de présentation standard à partir des fichiers dans lesquels sont stockées toutes les données brutes collectées.

2. Procédé de surveillance selon la revendication 1, **caractérisé en ce que** pour l'application dudit procédé, le module de connaissance sémantique (OS-SK) du système d'exploitation comporte trois parties, une première partie, en relation directe avec le module constructeur de page, qui contient le code permettant de recueillir des informations sémantiques et de les présenter, une seconde partie qui est le gestionnaire de structures logiques contenant le code qui permet de construire des structures sémantiques en regroupant des structures de base individuelles et enfin, une troisième partie qui est le gestionnaire de structures de base contenant le code qui permet de construire des structures de base.

3. Procédé de surveillance selon l'une des revendications 1 et 2, **caractérisé en ce que,** pour l'application dudit procédé, autre desdits agents intelligents qui est utilisé sur le serveur, intégré dans le module de construction d'information (OS-IB) du système d'exploitation, est un agent de gestion d'événements conçu pour envoyer des notifications en temps réel dans un mode donné, son utilisation permettant d'offrir une structure pour des registres tampons d'alarmes ainsi qu'un historique des alarmes pour faciliter la recherche relative à une alarme particulière, un seuil modifiable par l'utilisateur étant associé à chaque valeur instantanée d'information collectée, seuil qui, lorsqu'il est dépassé, permet de déclencher un événement.

4. Procédé de surveillance selon l'une des revendications 1 à 3, **caractérisé en ce qu'**il permet d'exploiter des fonctionnalités organisées pour réaliser les divers traitements suivants:
- le traitement propre aux configurations qui fournit une vue globale de la configuration logicielle et matérielle d'un serveur,
- le traitement propre à la gestion de réseaux qui fournit une vue synthétique relativement à la disponibilité des ressources concernées,
- le traitement propre à l'utilisation qui permet de surveiller la capacité des ressources en vue de satisfaire aux besoins actuels et futurs, qui implique de mesurer l'utilisation des ressources principales logicielles et matérielles et permet de fournir un contrôle visuel du serveur,
- le traitement propre aux changements qui permet de conserver toute trace de changement logiciel et matériel,
- le traitement propre aux événements qui permet de les détecter, réaliser des rapports de présentation, rechercher et corriger les problèmes relatifs au service d'émission de messages, une analyse des rapports de présentation relatifs aux problèmes permettant d'éviter la réapparition desdits problèmes,
- le traitement propre à la gestion des erreurs qui permet de rétablir des services normaux pour l'utilisateur,
- le traitement propre aux services qui permet le contrôle des services les plus utilisés tels que l'impression, la messagerie, le transfert de fichiers, l'initialisation de traitements à distance,
- le traitement propre à la sécurité qui permet de fournir l'état du contrôle d'accès à des ressources locales ou distribuées du point de vue utilisateur,
- le traitement propre aux applications qui permet de gérer diverses applications en fournissant des précisions sur l'état, l'utilisation, la consommation de ressources relativement à ces applications.

## Claims

1. Method of real-time monitoring of a computer system for its administration and help with its maintenance in the operating phase, a computer system communicating in client-server mode via interconnected networks (W), each client (WCL) having a browser (BRO) supporting a high-level hypertext language and, in order to perform said monitoring, intelligent agents are installed on each server (WSE) in order, after client requests are made, to perform a check on the status of each server (WSE) by measuring parameters indicating the status and behaviour of the server at a given moment, this information being collected automatically as a function of the domains examined and processed systematically by the server, so as to be proposed in the form of presentation reports contained in pages thus constructed and evolving dynamically, while the client browser (BRO) accesses these dynamic pages presenting the information collected and processed that meets its request, the parameters measured are stored and in that the systematic processing of the information collected for the construction of the dynamic pages is performed by the server in successive steps, one of which corresponds to the processing of said information by a page construction module (PM) that receives the client request from the network and prepares the pages by collecting the necessary data from the appropriate levels depending on its operating system, then by presenting said data to a generic tool module for helping with the construction, independent of the operating system, other steps correspond to the following respective modules:
- a semantic knowledge module (OS-SK) of the operating system that takes low-level data from an information construction module dependent on the operating system, then constructs a high-level semantic representation of the data required,
- an information construction module (OS-IB) of the operating system that uses commands dependent on the operating system for acquiring low-level data and offers an application interface for communicating with the semantic knowledge module of the operating system,
- a generic tool module (GT) for helping with the construction of the pages in the high-level hypertext language,
**characterized in that,** for the application of said method, one of said intelligent agents that is used on the server, integrated into the information construction module (OS-IB) of the operating system, is an agent for measuring and managing a machine, it makes it possible to automatically collect information that is then automatically produced in the form of presentation reports that are also automatically updated, this agent is used for producing pages relating to the use of the machines being monitored, while making it possible to collect raw data relating to the use of the machines, to calculate data that can be used for supplying calculated instantaneous data, to calculate the exceeding of thresholds and to produce the history of the data calculated, said agent being constituted by three main portions, the data collector, which collects data according to profiles that make it possible to determine which objects have to be monitored so as to collect the basic information necessary, the data manager, which makes it possible to rearrange the data collected from the various machines observed so as to facilitate access relative to predefined criteria, and the data reporter, which makes it possible to generate standard presentation reports from files in which all the raw data collected are stored.

2. Monitoring method according to Claim 1, **characterised in that,** for the application of said method, the semantic knowledge module (OS-SK) of the operating system has three portions, a first portion directly related to the page construction module, which contains the code making it possible to collect and present semantic information, a second portion, which is the manager of logical structures containing the code that makes it possible to construct semantic structures by grouping together individual basic structures and, finally, a third portion, which is the manager of basic structures containing the code that makes it possible to construct basic structures.

3. Monitoring method according to one of Claims 1 and 2, **characterised in that,** for the application of said method, another of said intelligent agents that is used on the server, integrated into the information construction module (OS-IB) of the operating system, is an event management agent designed for sending real-time notifications in a given mode, its use making it possible to offer a structure for alarm buffer registers together with an alarm history so as to facilitate the search for a particular alarm, a user-modifiable threshold being associated with each instantaneous value for information collected, which threshold, when exceeded, makes it possible to trigger an event.

4. Monitoring method according to one of Claims 1 to 3, **characterised in that** it makes it possible to use standard functions organised in order to perform the following different operations:
- configuration-specific processing, which provides an overall view of the software and hardware configuration of a server,
- network management-specific processing, which provides an overview relative to the availability of the resources in question,
- use-specific processing, which makes it possible to monitor the capacity of the resources with a view to meeting current and future needs, which involves measuring the use of the main software and hardware resources and makes it possible to provide a visual check on the server,
- change-specific processing, which makes it possible to keep any trace of a software or hardware change,
- event-specific processing, which makes it possible to detect events, produce presentation reports, search for and correct problems relating to the message-sending service, analyse the presentation reports relating to the problems, making it possible to prevent the recurrence of said problems,
- error management-specific processing, which makes it possible to reestablish normal services for the user,
- service-specific processing, which makes it possible to monitor the services most frequently used, such as printing, messaging, file transfer, remote initialisation of applications,
- security-specific processing, which makes it possible to provide the status of access monitoring to local or distributed resources from the user point of view,
- application-specific processing, which makes it possible to manage various applications by supplying details as to status, use and consumption of resources relative to these applications.

## Patentansprüche

1. Verfahren zum Überwachen eines Datenverarbeitungssystems in Echtzeit für dessen Management und die Unterstützung bei seiner Wartung in der Betriebsphase, wobei das Datenverarbeitungssystem im Client/Server-Modus über miteinander verbundene Netze (W) kommuniziert, jeder Client (WCL) einen Navigator (BRO), der eine Hypertext-Sprache auf hoher Ebene unterstützt, umfasst und für die Ausführung der Überwachung in jedem Server (WSE) intelligente Agenten installiert sind, die anschließend an die Formulierung von Client-Anfragen eine Kontrolle des Zustands jedes Servers (WSE) ausführen, indem Parameter, die den Zustand und das Verhalten des Servers zu einem gegebenen Zeitpunkt angegeben, gemessen werden, wobei diese Informationen in Abhängigkeit von Domänen, die vom Server in systematischer Weise untersucht und bearbeitet werden, automatisch gesammelt werden, damit sie in Form von Darstellungsberichten, die in auf diese Weise konstruierten Seiten enthalten sind und sich in dynamischer Weise entwickeln, bereitgestellt werden können, während der Navigator (BRO) des Clients auf diese dynamischen Seiten zugreift, die die gesammelten und verarbeiteten Informationen, die auf seine Anfrage antworten, darstellen, wobei die gemessenen Parameter gespeichert werden und die systematische Verarbeitung der Informationen, die für die Konstruktion der dynamischen Seiten durch den Server gesammelt werden, gemäß aufeinanderfolgender Schritte ausgeführt wird, wovon einer einer Verarbeitung der Informationen durch ein Seitenkonstruktionsmodul (PM) entspricht, das die Anfrage des Clients vom Netz empfängt und die Seiten aufbereitet, indem es die Nutzdaten auf den geeigneten Ebenen in Abhängigkeit von seinem Betriebssystem sammelt und die Daten dann einem vom Betriebssystem unabhängigen Konstruktionshilfe-Allgemeinwerkzeug-Modul bereitstellt, wobei weitere Schritte den folgenden jeweiligen Modulen entsprechen:
- einem Modul (OS-SK) für semantisches Wissen des Betriebssystems, das Daten auf niedriger Ebene in einem Informationskonstruktionsmodul in Abhängigkeit vom Betriebssystem abruft und dann eine semantische Darstellung der angeforderten Daten auf hoher Ebene konstruiert,
- einem Informationskonstruktionsmodul (OS-IB) des Betriebssystems, das vom Betriebssystem abhängige Befehle verwendet, um eine Erfassung von Daten auf niedriger Ebene vorzunehmen, und eine applikative Schnittstelle für die Kommunikation mit dem Modul für semantisches Wissen des Betriebssystems schafft,
- einem Allgemeinwerkzeug-Modul (GT) für die Unterstützung der Konstruktion der Seiten in der Hypertext-Sprache auf hoher Ebene,
**dadurch gekennzeichnet, dass** für die Anwendung des Verfahrens einer der intelligenten Agenten, der im Server verwendet wird und in das Informationskonstruktionsmodul (OS-IB) des Betriebssystems integriert ist, ein Maschinenmess- und -kontrollagent ist, der ermöglicht, automatisch Informationen zu sammeln, die anschließend automatisch in Form von Darstellungsberichten erzeugt werden, die ebenfalls automatisch aktualisiert werden, wobei dieser Agent betrieben wird, damit er die Seiten, die auf die Nutzung der überwachten Maschinen bezogen sind, erzeugt, indem er ermöglicht, Rohdaten, die auf die Nutzung der Maschinen bezogen sind, zu sammeln, Daten, die für die Lieferung von berechneten momentanen Daten verwendet werden können, zu berechnen, Überschreitungen der Schwellenwerte zu berechnen und die Historie der berechneten Daten zu schaffen, wobei der Agent aus drei Hauptteilen gebildet ist, dem Datensammler, der Daten gemäß Profilen sammelt, die die Bestimmung erlauben, welche Objekte überwacht werden sollen, indem er notwendige Basisinformationen sammelt, dem Datenmanager, der ermöglicht, die gesammelten Daten der verschiedenen beobachteten Maschinen in der Weise umzuordnen, dass der Zugriff auf im voraus definierte Kriterien erleichtert wird, und dem Daten-Berichterstatter, der ermöglicht, Standard-Darstellungsberichte anhand von Dateien zu erzeugen, in denen alle gesammelten Rohdaten gespeichert sind.

2. Überwachungsverfahren nach Anspruch 1, **dadurch gekennzeichnet, dass** für die Anwendung des Verfahrens das Modul (OS-SK) für semantisches Wissen des Betriebssystems drei Teile umfasst, einen ersten Teil, der mit dem Seitenkonstruktionsmodul in einer direkten Beziehung steht und den Code enthält, der das Sammeln semantischer Informationen und ihre Bereitstellung ermöglicht, einen zweiten Teil, der der Manager logischer Strukturen ist und den Code enthält, der die Konstruktion semantischer Strukturen durch Umgruppieren individueller Basisstrukturen ermöglicht, und schließlich einen dritten Teil, der der Manager von Basisstrukturen ist und den Code enthält, der die Konstruktion von Basisstrukturen ermöglicht.

3. Überwachungsverfahren nach einem der Ansprüche 1 und 2, **dadurch gekennzeichnet, dass** für die Anwendung des Verfahrens ein anderer der intelligenten Agenten, der im Server verwendet wird und in das Informationskonstruktionsmodul (OS-IB) des Betriebssystems integriert ist, ein Ereignismanagement-Agent ist, der so beschaffen ist, dass er Meldungen in Echtzeit in einer gegebenen Betriebsart schickt, wobei seine Nutzung die Schaffung einer Struktur für Alarm-Pufferregister sowie einer Historie der Alarme, die die auf einen besonderen Alarm bezogene Suche erleichtert, ermöglicht, wobei jedem momentanen Wert gesammelter Informationen ein vom Anwender modifizierbarer Schwellenwert zugeordnet ist, der, wenn er überschritten wird, die Auslösung eines Ereignisses ermöglicht.

4. Überwachungsverfahren nach einem der Ansprüche 1 bis 3, **dadurch gekennzeichnet, dass** es ermöglicht, organisierte Funktionalitäten auszuführen, um die folgenden verschiedenen Verarbeitungen vorzunehmen:
- die Verarbeitung für die Konfigurationen, die eine globale Sicht auf die Software- und Hardware-Konfiguration eines Servers ergibt,
- die Verarbeitung für das Netzmanagement, die eine synthetische Sicht in Bezug auf die Verfügbarkeit der betreffenden Betriebsmittel ergibt,
- die Verarbeitung für die Nutzung, die ermöglicht, die Kapazität der Betriebsmittel im Hinblick auf die Erfüllung der aktuellen und künftigen Bedürfnisse zu überwachen, was impliziert, die Nutzung der Software- und Hardware-Hauptbetriebsmittel zu messen, und ermöglicht, eine visuelle Kontrolle des Servers zu schaffen,
- die Verarbeitung für die Änderungen, die ermöglicht, jede Spur einer Software- und Hardware-Änderung aufzubewahren,
- die Verarbeitung für die Ereignisse, die ermöglicht, diese zu erfassen, Darstellungsberichte zu erstellen und die Probleme bezüglich des Nachrichtensendedienstes zu ermitteln und zu korrigieren, wobei eine Analyse der Darstellungsberichte in Bezug auf die Probleme ermöglicht, das erneute Auftreten dieser Probleme zu vermeiden,
- die Verarbeitung für das Management von Fehlern, die ermöglicht, die normalen Dienste für den Anwender wiederherzustellen,
- die Verarbeitung für die Dienste, die die Kontrolle der am häufigsten genutzten Dienste wie etwa das Drucken, die Nachrichtendienste, die Dateiübertragung und die Initialisierung von Fernverarbeitungen ermöglicht,
- die Verarbeitung für die Sicherheit, die ermöglicht, den Zustand der Kontrolle des Zugriffs auf lokale oder verteilte Betriebsmittel aus der Sicht des Anwenders zu liefern,
- die Verarbeitung für die Anwendungen, die ermöglicht, verschiedene Anwendungen zu steuern, indem sie Präzisierungen des Zustandes, der Nutzung und des Verbrauchs von Betriebsmitteln in Bezug auf diese Anwendungen liefert.
